# EUROPÄISCHE PATENTANMELDUNG

(11) **EP 1 974 823 A1**
(43) Veröffentlichungstag der Anmeldung: **01.10.2008**
(21) Anmeldenummer: 07006136.1
(22) Anmeldetag: 26.03.2007
(51) Int. Cl.: B04B 1/04, B04B 5/10, B04B 9/06

(54) **Segmentierte Zentrifuge mit Energie-Rückgewinnung zur Entsalzung vom Meerwasser**

(71) Anmelder: Weidner, Herbert, 63864 Glattbach (DE)
(72) Erfinder: Weidner, Herbert, 63864 Glattbach (DE)

(57) **Zusammenfassung**

1. Vorrichtung und Verfahren wahlweise zur Entsalzung von Meerwasser oder zur Erhöhung des Salzgehaltes. Das Prinzip eignet sich auch für andere Lösungen als Salzwasser.
2.1. Entsalzungsanlagen arbeiten meist entweder nach dem Destillationsverfahren oder mit Umkehrosmose. Beide Verfahren erfordern sehr viel Energie und entziehen dem Wasser alle Mineralien. Die Zentrifuge benötigt nur einen Bruchteil dieser Energie bei verringertem Wartungsaufwand.
2.2. Das Salzwasser wird in einer Zentrifuge, die aus mehreren Einzelkammern besteht, in salzarmes und salzreiches Wasser getrennt. Die entstehenden Teilmengen werden in benachbarte Einzelkammern transportiert und dort erneut zentrifugiert und getrennt. Geeignetes Kombinieren der Teilmengen und Ausnützen der Bewegungsenergie des Wassers spart Beschleunigungsenergie. Das aus der Zentrifuge austretende Wasser treibt eine Turbine an, um Energie zurückzugewinnen. Die Zentrifuge besitzt keine engen Durchlässe oder Membranen, die sich zusetzen können und aufwendig gereinigt werden müssen. Es werden keine Chemikalien benötigt, um einen störungsfreien Betrieb sicherzustellen. Das Verfahren erfordert keine Temperaturänderung des Wassers.
2.3. Die segmentierte Zentrifuge besitzt eine Zuführung und zwei Auslässe für Wasser. Je nach Position der Wasserzuführung kann man entweder vorzugsweise Wasser entsalzen oder den Salzgehalt steigern.

## Beschreibung

Technischer Stand: Zur Zeit erfolgt die großtechnische Herstellung von Süßwasser aus Meerwasser fast immer mit einem der folgenden Verfahren:
a) Bei der Destillation von Salzwasser findet man im Dampf vorzugsweise H₂O-Moleküle mit geringen Beimengungen schwerer Moleküle wie NaCl. Das Sieden kostet so viel Energie, dass dieses Verfahren nur dort angewendet wird, wo billiges Öl oder Gas als Heizmittel vorhanden sind. Der Einsatz von solarer Wärme ist keine wirtschaftliche Lösung, da wegen der geringen Energiedichte des Sonnenlichtes sehr große Kollektorflächen erforderlich sind und der Durchsatz (gewonnenes Süßwasser pro Quadratmeter Anlagenfläche) sehr gering ist. In jedem Fall begünstigt die hohe Verfahrenstemperatur die Korrosion der Geräte.
b) Bei der Umkehrosmose wird Salzwasser unter hohem Druck durch sehr feinporige Filter gepresst, wobei vorzugsweise die kleinen H₂O-Moleküle (also Süßwasser) das Filter passieren. Dieses Verfahren benötigt sehr viel Antriebsenergie bei der Druckerzeugung, die kaum wiedergewonnen werden kann. Dieses Verfahren leidet auch darunter, dass die Filter sehr schnell verschlammen (Fouling) und dann immer weniger Wasser durchtreten kann. Das bedeutet große Wartungskosten und/oder Einsatz von Chemikalien, die nichts im Trinkwasser zu suchen haben.

Weitere Verfahren wie Ausfrieren der gelösten Salze oder Elektrodialyse (Ionenaustausch) sind infolge ihres noch größeren Energiebedarfs nicht konkurrenzfähig.

Die beiden erstgenannten Verfahren haben den Nachteil, dass das erhaltene Wasser praktisch reines destilliertes Wasser ohne Mineralien ist. Das Zentrifugieren entfernt dagegen nicht vollständig die im Meerwasser gelösten Mineralien und besitzt deshalb nicht die Probleme von Verdampfungs- und Umkehrosmoseverfahren: Wasser, das überhaupt kein Calcium oder Magnesium aufweist, ist aggressiv gegenüber allen Metallgegenständen, mit denen es in Kontakt kommt. Außerdem ist destilliertes Wasser geschmacklos und kann nicht über einen längeren Zeitraum als Trinkwasser verwendet werden, da ihm lebenswichtige Mineralien fehlen. Diese müssen dem gewonnenen Wasser nachträglich wieder zugesetzt werden. In beiden beschriebenen Verfahren finden sich die lebenswichtigen Mineralien, die im Meerwasser vorhanden waren, in der Sole, die ein Nebenprodukt des Verfahrens ist. Ein Kostenpunkt bei der Erzeugung von Wasser mit jedem dieser Anlagetypen sind daher die Kosten für die Mineralien, die dem Wasser zurückgegeben werden müssen, und für die Ausrüstung, die für diesen Zweck erforderlich ist.

Bei beiden Verfahren ist der Herstellungsaufwand pro Liter Brauchwasser so groß, dass die Erzeugung großer Mengen für Bewässerung von landwirtschaftlichen Flächen nirgends durchgeführt wird. Ziel des Zentrifugenverfahrens ist es, die Betriebskosten und den Wartungsaufwand im Vergleich zu den oben beschriebenen Verfahren deutlich zu reduzieren.

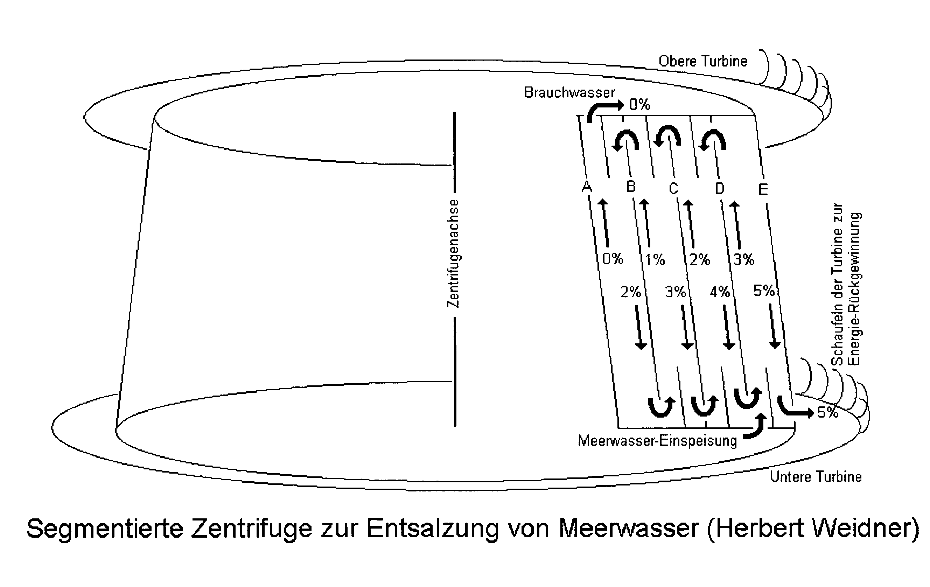

Physikalischer Hintergrund: Ein Wasser-Molekül (H₂O) hat (16 + 1 + 1) atomare Masseneinheiten und besitzt somit etwa ein Drittel der Masse eines Kochsalz-Moleküls (NaCl) mit (35,5 + 23) Masseneinheiten. Weitere im Meerwasser enthaltene Moleküle sind ebenfalls deutlich schwerer als H₂O. Deshalb lässt sich der Salzgehalt von Wasser durch Zentrifugieren ändern: Die achsennahen Flüssigkeitsanteile werden geringeren Salzgehalt besitzen und wenige schwere Moleküle enthalten. Diese werden sich am äußeren Trommelrand anreichern und können getrennt entnommen werden. Der Konzentrationsunterschied hängt wesentlich von der Drehzahl der Zentrifuge ab und ist proportional zum Quadrat der Umfangsgeschwindigkeit. Diese kann aber mit Rücksicht auf die Materialfestigkeit nicht beliebig gesteigert werden und deshalb wird der Entmischungsgrad pro Trommel nur einige Prozent betragen. In diesem Patent wird vorgeschlagen, einige Trommeln konzentrisch anzuordnen und Salzwasser unterschiedlicher Konzentration mit den Nachbartrommeln auszutauschen. Dafür sind an den Rändern jedes Zylinders Durchlässe bzw. Überläufe angeordnet, durch die das Salzwasser in die Nachbartrommel gelangt. Salzreiches Wasser tritt an einem Ende des Zylinders (in der Zeichnung ist dies immer das untere Ende) in die weiter außen liegende Nachbartrommel über. Dagegen tritt salzarmes Wasser am anderen (oberen) Ende des Zylinders in die weiter innen liegende Trommel über. Nach ausreichend vielen Stufen kann der innersten (achsennahen) Trommel entsalztes Wasser entnommen werden, wogegen das salzreiche Wasser die Zentrifuge am Umfang tangential verlässt. (Anmerkung: Der Raum zwischen zwei benachbarten Zylindern wird als Trommel bezeichnet)

Technische Umsetzung: Salzwasser unterschiedlicher Konzentration muss also in jeder Trommel in unterschiedliche Richtung bewegt werden. Folgende Gestaltungsmerkmale der Zylinderflächen bewirken diesen Transport des Wassers und wirken wie eingebaute Pumpen:
a) Die "Zylinder" besitzen keinen konstanten Durchmesser, sie sind vielmehr die Mantelflächen von Kegelstümpfen. Deshalb wird die radiale Zentrifugalkraft auf das Salzwasser teilweise in eine achsenparallele Kraft umgelenkt. Auf salzhaltiges Wasser mit höherer Dichte wirkt deshalb hohe Zentrifugalkraft, es gleitet auf der Innenseite des Kegelstumpfes und wird zum unteren Rand gedrückt, der den größeren Durchmesser aufweist.
b) Der Kegelstumpf besitzt eine höhere Rotationsfrequenz als das anliegende Salzwasser, weil der Antriebsmotor die Zentrifuge antreibt und diese das Wasser beschleunigen muss. Durch eine geeignete spiralförmige Strukturierung der inneren Oberfläche des Kegelstumpfes wird also das Salzwasser zu dem Rand gedrückt, der den größeren Durchmesser aufweist.
   Beide Effekte a) und b) wirken gleichsinnig auf das salzhaltigere Wasser, das in der begleitenden Zeichnung in jeder Trommel nach rechts unten transportiert wird und dort entweder in die benachbarte, weiter außen liegende Trommel übertritt oder die Zentrifuge verlässt.
c) Die salzärmeren Wasseranteile in jeder Trommel besitzen geringe Dichte, auf sie wirkt deshalb geringe Zentrifugalkraft und sie werden in Richtung Rotationsachse gedrückt. Dieses salzarme Wasser wird also auf der Außenseite des Kegelstumpfes zum oberen Rand gedrückt, der den kleineren Durchmesser aufweist.
d) Auch hier unterscheidet sich die Rotationsfrequenz des Kegelstumpfes von der Geschwindigkeit des Wassers. Durch eine geeignete spiralförmige Strukturierung der Außenfläche des Kegelstumpfes wird also das Salzwasser zu dem Rand gedrückt, der den kleineren Durchmesser aufweist.
   Beide Effekte c) und d) wirken gleichsinnig auf das salzarme Wasser, das in der beigefügten Zeichnung in jeder Trommel nach links oben transportiert wird und dort entweder in die benachbarte achsennähere Trommel übertritt oder als entsalztes Wasser die Zentrifuge verlässt.
e) Um die Wirkung der Effekte a) bis d) zu steigern, unterscheiden sich die Drehzahlen benachbarter Kegelstumpfmäntel geringfügig. In der begleitenden Zeichnung werden die Kegelstümpfe mit den Bezeichnungen A, C, E, .... miteinander verbunden und rotieren mit einer Drehgeschwindigkeit um die vertikale Achse. Die Kegelstümpfe B, D, ... sind ebenfalls verbunden und rotieren mit einer leicht abweichenden, aber gleichsinnigen Drehgeschwindigkeit um die vertikale Achse.

Die in der Zeichnung genannten Prozentzahlen müssen nicht mit den angegebenen Werten vorkommen, sie sollen nur beispielhaft und zum leichteren Verständnis den ungefähren Salzgehalt des Wassers angeben. Ebenso wird eine großtechnische Zentrifuge nicht nur aus den vier dargestellten Trommeln bestehen.

Der Zentrifuge muss immer wieder Meerwasser (Salzgehalt etwa 4%) nachgeliefert werden. Das kann, muss nicht bei der "äußersten" Trommel geschehen. Es kann den Gesamtwirkungsgrad bei Zentrifuge vergrößern, wenn diese Meerwasser-Einspeisung bei einer "mittleren" Trommel vorgenommen wird. Dann wird der Salzgehalt hier etwa 4% betragen. Der Salzgehalt "äußerer" Trommeln wird dann größer als 4% und der Salzgehalt "innerer" Trommeln wird geringer als 4% sein und gegen Null streben. Auf diese Weise kann die Verweildauer des Meerwassers in der Zentrifuge verlängert werden und es muss weniger "Frischwasser" auf die Umfangsgeschwindigkeit der Zentrifuge beschleunigt werden. Das reduziert den Energiebedarf der Zentrifuge.

Die Zentrifuge kann auch eingesetzt werden, um den Anteil eines gelösten Stoffes zu vergrößern (Anspruch 7). Diese Konzentrationssteigerung kann in der chemischen Industrie wertvoll sein, da sie nicht mit einer Änderung der Temperatur einhergeht. Dazu muss die Flüssigkeit etwa der "inneren" Trommel zugeführt werden. Das Konzentrat kann dann am Auslaß der äußersten Trommel entnommen werden.

Energie-Rückgewinnung: Wenn die beiden Wassersorten (salzreich und salzarm) die Zentrifuge tangential verlassen, besitzen sie enorme Geschwindigkeit. Diese muss ausgenutzt werden, um den Energiebedarf der Gesamtanlage zu verringern. Die Zentrifuge wird deshalb mit Turbinenrädern umgeben, die eine gewisse Ähnlichkeit zu einer Freistrahl-Turbine besitzen (Anspruch 6). Diese Turbinen nach Turgo-Bauart haben die Aufgabe, die mit hoher Geschwindigkeit auftreffenden Wasserspritzer auf möglichst geringe Geschwindigkeit abzubremsen und deren kinetische Energie vollständig auszunutzen. Das gelingt wegen dem Impulssatz besonders gut, wenn die Turbinenräder etwa die halbe Drehzahl der Zentrifuge besitzen.

Die Energie, die den Turbinen entnommen werden kann, liegt zwischen 60% und 95% der Energie, die das austretende Wasser als kinetische Energie besitzt. Benutzt man diese Energie, um beispielweise das Meerwasser zur Zentrifuge oder das in der Zentrifuge erzeugte Süßwasser zum Verbraucher zu pumpen, lässt sich der Energiebedarf der Gesamtanlage merklich reduzieren. In der Zeichnung sind die Turbinen am oberen und unteren Rand nur angedeutet.

## Patentansprüche

1. Zentrifuge, deren Innenraum durch mehrere koaxiale Zylinder unterschiedlichen Durchmessers in Einzelkammern (Trommeln) aufgeteilt wird. Diese Zylinder haben eine gemeinsame Drehachse, müssen aber keine einheitliche Rotationsfrequenz besitzen.

2. Zentrifuge nach Anspruch 1, bei der einige oder alle Zylinder durch Kegelmäntel (konische Form) ersetzt sind.

3. Zentrifuge nach Anspruch 1, deren Zylinder (oder Kegelmäntel) beidseitig spiralige Oberflächenkonturen oder Leitbleche besitzen, um die oberflächennahen Flüssigkeitsschichten achsenparallel zu transportieren. Die Drehzahlen benachbarter Zylinder (oder Kegelmäntel) unterscheiden sich geringfügig.

4. Zentrifuge nach Anspruch 1, bei der zwischen den Trommeln feste und/oder steuerbare Öffnungen und/oder Überläufe existieren, die einen kontrollierten und teilweisen Übertritt des salzhaltigen Wassers in benachbarte Trommeln ermöglichen. Diese Öffnungen können wahlweise fest eingestellt sein oder durch externe Signale und/oder interne (mitrotierende) Sensoren wie Überdruckschalter geändert werden.

5. Zentrifuge nach Anspruch 1, bei der die Trommel an der Außenwand steuerbare Öffnungen besitzt, durch die das Wasser tangential austreten kann, um eine Turbine (Anspruch 6) anzutreiben.

6. Zentrifuge nach Anspruch 5, die von Turbinenrädern umgeben ist. Diese werden vom austretenden Wasser angetrieben. Zweck der Turbinen ist, möglichst viel von der Rotationsenergie zurückzugewinnen, die in der Zentrifuge nach Anspruch 1 zur Beschleunigung des Wassers aufgewendet wird.

7. Zentrifuge nach Ansprüchen 1 bis 6, bei dem die Zentrifuge eine beliebige Flüssigkeit mit gelösten Stoffen enthält.

8. Zentrifuge nach Ansprüchen 1 bis 6, bei der je nach Position der Flüssigkeitszufuhr die Konzentration der gelösten Stoffe verringert oder vergrößert werden kann.
